**Europäisches Patentamt**

**European Patent Office**

**Office européen des brevets**

(19)

(11) Veröffentlichungsnummer: **0 001 984**
**B1**

(12) **EUROPÄISCHE PATENTSCHRIFT**

(45) Veröffentlichungstag der Patentschrift:
**13.05.81**

(51) Int. Cl.³: **E 03 C 1/10**, F 16 K 15/00

(21) Anmeldenummer: **78101190.3**

(22) Anmeldetag: **21.10.78**

(54) **Rückflussverhinderer.**

(30) Priorität: **18.11.77 DE 2751468**

(43) Veröffentlichungstag der Anmeldung:
**30.05.79 Patentblatt 79/11**

(45) Bekanntmachung des Hinweises auf die Patenterteilung:
**13.05.81 Patentblatt 81/19**

(84) Benannte Vertragsstaaten:
**CH FR NL SE**

(56) Entgegenhaltungen:
**FR-A-1 550 782**
**FR-A-2 110 974**

(73) Patentinhaber: **Braukmann Armaturen AG, Bahnweg 2, CH-4852 Rothrist (CH)**

(72) Erfinder: **Vollmer, Rudolf, Friedrich-Hölderlin-Strasse 23, D-6950 Mosbach (DE)**

(74) Vertreter: **Schmid, Berthold, Dipl.-Ing. et al, Falbenhennenstrasse 17, D-7000 Stuttgart 1 (DE)**

## Rückflussverhinderer

Die Erfindung bezieht sich auf einen Rückflussverhinderer, insbesondere zum Einbau in eine Hauswasserleitung, mit einem Rückflussverhindererventil, das zwischen einem Frischwasserzuleitungsstutzen und einem Frischwasserableitungsstutzen angeordnet ist, sowie mit einem Ablassventil für Abwasser, das zwischen dem Frischwasserabflussstutzen und einer Ablassöffnung für Abwasser angeordnet ist, wobei beide Ventile axial hintereinander liegen und ein gemeinsames Verschlussorgan aufweisen, das in axialer Richtung verschiebbar ist, im Öffnungssinn des Rückflussverhindererventiles gegen Federdruck axial vom zulaufenden Frischwasserdruck beaufschlagt ist und eine derartige Länge hat, dass etwa beim Öffnen des einen Ventils das andere geschlossen wird und umgekehrt, und das im Bereich des Ablassventils als in den Ventilsitz eintauchender Körper ausgebildet ist. Ein derartiger Rückflussverhinderer ist beispielsweise durch die FR-A-15 50 782 bereits bekanntgeworden. Das Frischwasser strömt bei diesem Rückflussverhinderer durch das gemeinsame Verschlussorgan des Rückflussverhindererventils und des Ablassventils, weswegen es zwangsläufig auch durch das Ablassventil selbst fliesst. Im Falle einer Strömungsumkehr schliesst beim Rückflussverhinderer des bekannten Standes der Technik zunächst das Rückflussverhindererventil und anschliessend wird das geschlossene Rückflussverhindererventil als Ganzes vom Ablassventil weg verschoben. Aufgrund des gemeinsamen Verschlussorgans von Rückflussverhindererventil und Ablassventil bewirkt diese Verschiebung des Rückflussverhindererventils ein Öffnen des Ablassventils. Zuvor verschliesst aber das Rückschlagventil den Zugang zum Ventilsitz des Ablassventils. Das Vorhandensein eines Rückschlagventils ist also bei diesem Rückflussverhinderer unerlässlich.

Insgesamt gesehen ist die Konstruktion dieses vorbekannten Rückflussverhinderers relativ aufwendig und im Hinblick auf das verschiebbare Rückflussverhindererventil auch vergleichsweise störanfällig, wobei insebsondere ein Verklemmen des hochgeschobenen tellerförmigen Ventilsitzes nicht ausgeschlossen werden kann.

Die Aufgabe der Erfindung wird infolgedessen darin gesehen, einen Rückflussverhinderer gemäss dem Oberbegriff des Anspruchs 1 so auszubilden, dass bei einfachem und robustem Aufbau im Falle einer Strömungsumkehr ein sicheres Reduzieren oder ein Druckabbau im Hinterdruckraum möglich ist.

Zur Lösung dieser Aufgabe wird erfindungsgemäss vorgeschlagen, dass bei einem Rückflussverhinderer der eingangs genannten Art das Verschlussorgan auch im Bereich des Rückflussverhindererventils als in den Ventilsitz des Rückflussverhindererventils eintauchender zylindrischer Körper ausgebildet ist, der kolbenartig geschlossen ist, und dass die Ablassöffnung sich axial an das Ablassventil anschliesst, und der Abflussstutzen sich zwischen beiden Ventilen am beide Ventile umschliessenden Ventilgehäuse befindet.

Dieses Rückflussverhindererventil zeichnet sich insofern durch eine hohe Betriebssicherheit aus, als sein Rückflussverhindererventil von einfacher Bauart ist und es grundsätzlich nur dann öffnen kann, wenn zuvor das Ablassventil verschlossen wurde und umgekehrt. Es kommt noch hinzu, dass man von aussen her auf das gemeinsame Verschlussorgan des Rückflussverhindererventils und des Ablassventils nicht einwirken kann, so dass auch insoweit ein störungsfreier Betrieb stets gewährleistet ist. Durch die Verwendung relativ weniger, einfacher Teile erhält man eine besonders robuste und letztlich auch kostengünstig zu fertigende Ausführung. Da das Öffnen und Schliessen des Rückflussverhindererventils und des Ablassventils grundsätzlich zwangsgekuppelt sind und damit keines ohne das andere öffnen oder schliessen kann, ist an sich der Einbau eines Rückschlagventils nicht erforderlich, jedoch ohne Schwierigkeiten grundsätzlich möglich.

In Weiterbildung der Erfindung wird vorgeschlagen, dass das Verschlussorgan im wesentlichen einen konstanten Querschnitt und etwa an seinem Mittelteil einen umlaufenden Bund zum Abstützen des einen Endes der Belastungsfeder aufweist. Der Bund kann angeformt oder angesetzt sein. Ausserdem kann man anstelle eines Bundes auch mehrere am Umfang verteilte Stützglieder vorsehen.

Das andere Federende ist gemäss einer weiteren Variante der Erfindung durch einen rohrförmigen, quer durchströmbaren Gehäuseansatz zentriert, der zugleich eine Führung für das darin verschiebbare Ende des Verschlussorgans ist. Der Gehäuseansatz kann mit radialen Durchbrüchen versehen oder längslaufende, insbesondere bis zum freien Ende reichende Schlitze besitzen.

Gemäss einer anderen Ausgestaltung der Erfindung ist vorgesehen, dass der Bund zugleich ein Anschlagglied des Verschlussorgans bildet, das bei geöffnetem Rückflussverhindererventil und geschlossenem Ablassventil am rohrförmigen Gehäuseansatz und bei geschlossenem Rückflussverhindererventil sowie geöffnetem Ablassventil am oder im Bereich des Ventilsitzes des Rückflussverhindererventils anliegt.

Durch den Anschlag und seine beiden Anschlag-Gegenflächen sind die maximalen Öffnungsweiten des Rückflussverhindererventils und des Ablassventils festgelegt.

Gemäss einer Weiterbildung der Erfindung wird vorgeschlagen, dass das Verschlussorgan das Gehäuse bei geöffnetem Rückflussverhindererventil und geschlossenem Ablassventil durch die Ablassöffnung hindurch nach aussen überragt, so dass man bei undurchsichtigem Gehäuse von aussen die Stellung des Verschlussorgans erkennen und daraus Rückschlüsse auf die Strömungsrichtung im Rückflussverhinderer ziehen kann.

Gemäss einer weiteren Ausbildung der Erfindung ist vorgesehen, dass der Ventilsitz des Ablassventils durch das aus einem O-Ring bestehende Dichtelement und derjenige des Rückflussverhindererventils durch einen Nutring gebildet sind. In beiden Fällen handelt es sich um radiale Ventilsitze, welche das Hindurchschieben des bereits dicht anliegenden Verschlussorgans um eine gewisse Überlaufstrecke gestatten. Eine andere Weiterbildung der Erfindung sieht vor, dass die Nut für den O-Ring des Ablassventils, die Ablassöffnung und der quer durchströmbare Gehäuseansatz an einem abnehmbaren Gehäuseteil angebracht sind. Dies ermöglicht eine rasche Montage und Demontage sowohl der Belastungsfeder als auch des Verschlussorgans. Zweckmässigerweise ist dieses Gehäuseteil aus transparentem Material, vorzugsweise Kunststoff, hergestellt, so dass die Bewegung des Verschlussorgans von aussen leicht beobachtet werden kann.

Eine weitere Variante der Erfindung sieht vor, dass das Gehäuse eine kreuzförmige Gestalt besitzt, dessen Querbalken durch den Zufluss- und Abflussstutzen gebildet ist sowie den Ventilsitz des Rückflussverhindererventils aufnimmt und an dessen Unterseite das abnehmbare, topfförmige Gehäuseteil befestigt ist, wobei an seiner Oberseite ein zweites abnehmbares, topfförmiges Gehäuseteil angebracht ist und die beiden topfförmigen Gehäuseteile den Längsbalken des Kreuzes bilden. Dieses Gehäuse ermöglicht eine sehr kompakte Bauform des Rückflussverhinderers und insbesondere dessen Einbau in einen durchgehenden Leitungsstrang. Ausserdem führt bei horizontal verlaufenden Anschlussstutzen das Verschlussorgan eine rein vertikale Bewegung durch, was im Hinblick auf die stets gute Funktionsweise erstrebenswert ist.

In weiterer Ausbildung der Erfindung wird vorgeschlagen, dass im zweiten abnehmbaren Gehäuseteil ein Arretierungsorgan für das Verschlussorgan gelagert ist, wobei das Betätigungsorgan lediglich drehbar, aber unverschiebbar im zweiten Gehäuseteil gelagert ist, und eine damit verbundene Gewindespindel ein Gewinde des Verschlussorgans oder eines darin eingesetzten Teils durchsetzt, und dass sich das Gewinde an einer drehfest, aber längsverschiebbaren Mutter im Innern des Verschlussorgans befindet, wobei im Verschlussorgan eine Anschlagscheibe für die Mutter in einer derartigen Lage angeordnet ist, dass bei entsprechend auf der Spindel eingestellter Mutter das Rückflussverhindererventil in geschlossener Stellung arretiert ist, während in der anderen Endstellung der Mutter das Verschlussorgan sich von der Mutter unbehindert verstellen kann. Hierdurch ist es möglich, das Rückflussverhindererventil unabhängig vom Druckgefälle vor und hinter seinem Ventilsitz in die Schliessstellung zu bringen und zu arretieren, um dann beispielsweise die Belastungsfeder gegen eine andere auszutauschen. Ausserdem ermöglicht dies auch das Ersetzen des O-Ringes des Ablassventils durch einen anderen, falls sich dies als notwendig herausstellt, ohne dass dabei der Rückflussverhinderer vom Rohrstrang genommen werden muss.

In der Zeichnung sind zwei Ausführungsbeispiele der Erfindung anhand vertikaler Längsmittelschnitte dargestellt.

Das Gehäuse 1 des erfindungsgemässen Rückflussverhinderers hat eine kreuzförmige Gestalt. Dabei ist der Querbalken durch den Zuflussstutzen 2 und den Abflussstutzen 3 gebildet. Daran sind abnehmbar ein erstes topfförmiges Gehäuse 4 und ein zweites, gleichfalls topfförmiges Gehäuse 5 befestigt. Beide bilden zusammen den Längsbalken des Kreuzes. Sie sind in je ein Gewinde 6 bzw. 7 des Gehäuseteils 2, 3 eingeschraubt und gegenüber diesem durch Dichtringe 8 bzw. 9 abgedichtet.

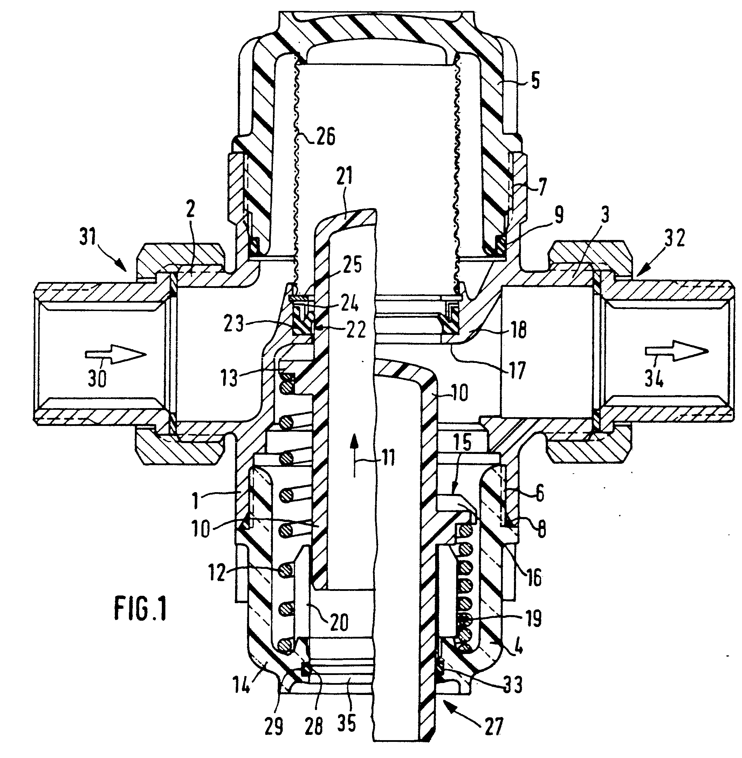

Im Gehäuse 1 ist in vertikaler Richtung ein Verschlussorgan 10 auf und ab verschiebbar, welches in der linken Bildhälfte der Figur 1 in seiner oberen und in der rechten Bildhälfte in seiner unteren Endlage gezeichnet ist. Es ist im Sinne des Pfeils 11, d.h. in Schliessrichtung des Rückflussverhindererventils federbelastet, wobei die Belastungsfeder mit 12 bezeichnet ist. Letztere stützt sich mit ihrem oberen Ende an einem radial nach aussen ragenden Bund 13 des Verschlussorgans 10 und mit ihrem unteren Ende am Boden 14 des ersten topfförmigen Gehäuseteils 4 ab. Der Bund 13 befindet sich im mittleren Bereich des Verschlussorgans 10. Er bildet zugleich ein Anschlagglied 15. Letzteres kann, wie die Ausführungsbeispiele zeigen, auch aus radial verlaufenden, auf den Bund 13 aufgesetzten Rippen 16 gebildet sein.

In der oberen Endstellung des Verschlussorgans 10 liegt das Anschlagglied 15 an der Unterseite 17 einer Gehäusezwischenwand 18 des Gehäuseteils 2, 3 an. In der unteren Endstellung sitzt der Bund 13 auf dem freien inneren Ende eines hülsenförmigen zentrischen Gehäuseansatzes 19 auf. Er ist einstückig mit dem ersten topfförmigen Gehäuseteil 4 gefertigt und bildet zugleich eine Zentriervorrichtung für das ihn umgebende Ende der als Schraubendruckfeder ausgebildete Belastungsfeder 12. Längsschlitze 20 ermöglichen eine radiale Durchströmung des Gehäuseansatzes 19, bei angehobenem Verschlussorgan 10. Letzteres besteht im wesentlichen aus einem Rohr, welches an seinem oberen Ende 21 verschlossen ist. Es kann aus Kunststoff hergestellt sein.

Der Ventilsitz 22 wird durch einen Dichtring 23 oder genauer gesagt, durch dessen Dichtlippe gebildet. Es handelt sich insofern um einen in radialer Richtung elastischen Ventilsitz. Die Dichtlippe liegt am Mantel des Verschlussorgans an und gestattet sein beliebig weites Hindurchschieben. Die Verschiebebewegung wird durch den erwähnten Bund 13 bzw. Anschlag begrenzt. Der Dichtring 22 und ein zugehöriger Stützring 24 werden mittels eines Sprengrings 25 od. dgl. im Gehäuse festgehalten. Nach oben hin kann sich noch ein zylinderförmiges Sieb 26 anschliessen.

Der erfindungsgemässe Rückflussverhinderer besitzt ein Ablassventil 27. Sein Ventilsitz wird durch einen O-Ring 28 od. dgl. gebildet, der in eine Nut 29 des ersten topfförmigen Gehäuseteils 4 eingesetzt ist. Auch dieser Ventilsitz ist in radialer Richtung elastisch, um das Hindurchschieben des rohrförmigen unteren Endes des Verschlussorgans 10 zu ermöglichen. Letzteres ist infolgedessen ein Doppel-Verschlussorgan, dessen oberes Teil dem Rückflussverhindererventil und dessen unteres Teil dem Ablassventil 27 angehört. In der oberen Endstellung (linke Bildhälfte der Figur 1) ist die Unterkante des Verschlussorgans 10 dem Ventilsitz 28 vorzugsweise circa 20 mm entfernt. Dasselbe gilt in der unteren Endstellung (rechte Bildhälfte der Figur 1) des Verschlussorgans in etwa auch für das obere Ende und den Ventilsitz 22. Ausserdem steht das Verschlussorgan in der unteren Endstellung über das Gehäuse nach unten über, so dass diese Stellung von aussen her erkennbar ist. Alternativ oder zusätzlich kann man das erste topfförmige Gehäuseteil 4 aus durchsichtigem oder ausreichend durchscheinendem Material, insbesondere aus Kunststoff evtl. auch aus Glas herstellen. Vorzugsweise fertigt man auch das zweite topfförmige Gehäuseteil 5 aus Kunststoff, der insbesondere farbig ist.

Das Medium, beispielsweise Frischwasser, strömt in Richtung des Pfeils 30 über den Zuflussstutzen 2, der ebenso wie der Abflussstutzen 3 noch eine Verschraubung 31 bzw. 32 tragen kann, in den Rückflussverhinderer ein. Das Verschlussorgan 10 nimmt aufgrund der Kraft der Belastungsfeder 12 zunächst die in der linken Bildhälfte der Figur 1 gezeigte Stellung ein. Wenn der Vordruck genügend gross ist, wird das Verschlussorgan 10 entgegen dem Pfeil 11 gegen die Kraft der Belastungsfeder 12 in die aus der rechten Bildhälfte der Figur 1 ersichtliche untere Endstellung gedrückt. Sobald das obere Ende des Verschlussorgans 10 von seinem aus dem Dichtring 23 bestehenden Ventilsitz 22 freikomt, ist das Ablassventil 27 geschlossen, weil dann das untere Ende des Verschlussorgans 10 in den, durch den O-Ring 33 gebildeten Ventilsitz 28 eingeschoben ist. Das Medium durchströmt den Ventilsitz 22 und verlässt den Rückflussverhinderer im Sinne des Pfeils 34 über den Abflussstutzen 3. In letzterem kann in nicht dargestellter Weise noch ein zusätzliches Rückschlagventil eingebaut sein, welches das Medium lediglich in Pfeilrichtung 34 durchlässt. Sobald der Vordruck unter einen bestimmten, durch die Belastungsfeder 12 festgelegten Wert absinkt, geht das Verschlussorgan von der unteren in die obere Endstellung zurück, wobei dann das Ablassventil geöffnet wird. Das rückströmende Medium kann infolgedessen über die Ablassöffnung 35 austreten, die mit einer weiterführenden Leitung verbunden sein kann.

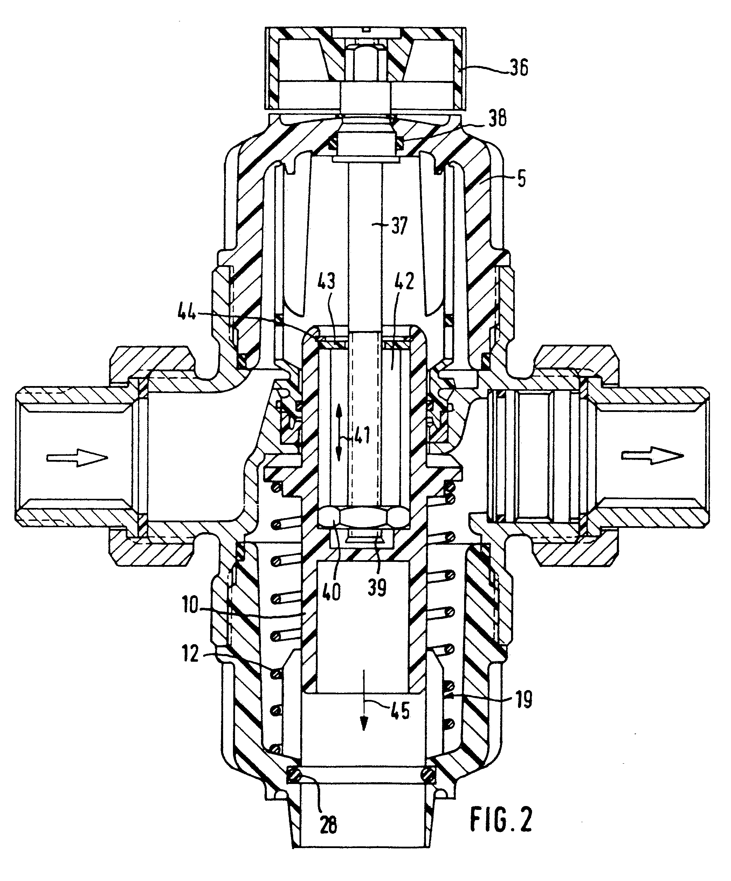

Das Ausführungsbeispiel der Figur 2 unterscheidet sich im Prinzip von demjenigen der Figur 1 lediglich durch das Vorhandensein eines Arretierungsorgans 36. Es ist drehfest mit einer Gewindespindel 37 verbunden. Letztere ist drehbar aber unverschiebbar im zweiten topfförmigen Gehäuse 5 gelagert und mittels eines O-Ringes 38 abgedichtet. Ihr freies Ende 39 ist verdickt, weswegen es durch die Mutter 40 nicht hindurchgeschraubt werden kann. Die Mutter ist undrehbar, aber in Richtung des Doppelpfeils 41 verschiebbar im oberen Hohlraum 42 des Verschlussorgans 10 gelagert, welches hinsichtlich seiner Innenraumgestaltung von der Ausführungsform gemäss Figur 1 abweicht. Nach oben hin wird die Verschiebebewegung der Mutter 40 durch eine Scheibe 43 begrenzt, welche von der Gewindespindel 37 zentrisch durchsetzt wird und die mittels eines Sprengrings 44 gehalten ist. Ein Drehen des Arretierungsorgans 36 hat ein Auf- und Abwandern der Mutter 40 in dem mit einem Sechskantquerschnitt versehenen oberen Hohlraum 42 zur Folge. Befindet sich die Mutter wie in Figur 2 ganz unten, so kann das Verschlussorgan 10 mit Hilfe des hydraulischen Druckes gegen die Kraft der Feder 12 in Pfeilrichtung 45 nach unten verschoben werden. Eine derartige Verschiebung ist indessen nicht möglich, wenn man die Mutter 40 mit Hilfe der Gewindeverbindung nach oben zieht, so dass sie schliesslich an der Unterseite der Scheibe 43 anliegt. Im Bedarfsfalle kann man das Verschlussorgan 10 gegen Drehen sichern, beispielsweise unter Zuhilfenahme des Gehäuseansatzes 19.

## Ansprüche

1. Rückflussverhinderer, insbesondere zum Einbau in eine Hauswasserleitung mit einem Rückflussverhindererventil (22, 23, 10), das zwischen einem Frischwasserzuleitungsstutzen (2) und einem Frischwasserableitungsstutzen (3) angeordnet ist, sowie mit einem Ablassventil (27) für Abwasser, das zwischen dem Frischwasserabflussstutzen (3) und einer Ablassöffnung (35) für Abwasser angeordnet ist, wobei beide Ventile axial hintereinander liegen und ein gemeinsames Verschlussorgan (10) aufweisen, das in axialer Richtung verschiebbar ist, im Öffnungssinn des Rückflussverhindererventiles (22, 23, 10) gegen Federdruck (19) axial vom zulaufenden Frischwasserdruck beaufschlagt ist und eine derartige Länge hat, dass etwa beim Öffnen des einen Ventils das andere geschlossen wird und umgekehrt, und das im Bereich des Ablassventils als in den Ventilsitz (28) eintauchender Körper ausgebildet ist, dadurch gekennzeichnet, dass das Verschlussorgan (10) auch im Bereich des Rückflussverhindererventils als in den Ventilsitz (22) des Rückflussverhindererventils eintauchender zylindrischer Körper ausgebildet ist, der kolbenartig geschlossen ist, und dass die Ablassöffnung (35) sich axial an das Ablassventil (27) anschliesst, und der Abflussstutzen (3) sich zwischen beiden Ventilen am beide Ventile umschliessenden Ventilgehäuse befindet.

2. Rückflussverhinderer nach Anspruch 1, dadurch gekennzeichnet, dass das Verschlussorgan (10) im wesentlichen einen konstanten Querschnitt und etwa an seinem Mittelteil einen umlaufenden Bund (13) zum Abstützen des einen Endes der Belastungsfeder (12) aufweist.

3. Rückflussverhinderer nach Anspruch 2, dessen Belastungsfeder als Schraubendruckfeder ausgebildet ist, dadurch gekennzeichnet, dass sich das andere Ende der Belastungsfeder (12) im Bereich der Ablassöffnung (35) am Gehäuse (1) abstützt.

4. Rückflussverhinderer nach Anspruch 3, dadurch gekennzeichnet, dass das andere Federende durch einen rohrförmigen, quer durchströmbaren Gehäuseansatz (19) zentriert ist, der zugleich eine Führung für das darin verschiebbare Ende des Verschlussorgans (10) ist.

5. Rückflussverhinderer nach einem oder mehreren der Ansprüche 2 bis 4, dadurch gekennzeichnet, dass der Bund (13) zugleich ein Anschlagglied (15) des Verschlussorgans (10) bildet, das bei geöffnetem Rückflussverhindererventil (22, 23, 10) und geschlossenem Ablassventil (27) am rohrförmigen Gehäuseansatz (19) und bei geschlossenem Rückflussverhindererventil sowie geöffnetem Ablassventil am oder im Bereich des Ventilsitzes (22) des Rückflussverhindererventils anliegt.

6. Rückflussverhinderer nach einem oder mehreren der vorhergehenden Ansprüche, dadurch gekennzeichnet, dass das Verschlussorgan (10) das Gehäuse (1) bei geöffnetem Rückflussverhindererventil (22, 23, 10) und geschlossenem Ablassventil (27) durch die Ablassöffnung (35) hindurch nach aussen überragt.

7. Rückflussverhinderer nach einem oder mehreren der vorhergehenden Ansprüche, dadurch gekennzeichnet, dass der Ventilsitz (28) des Ablassventils (27) durch das aus einem O-Ring (33) bestehende Dichtelement und derjenige des Rückflussverhindererventils durch einen Nutring (23) gebildet sind.

8. Rückflussverhinderer nach Anspruch 7, dadurch gekennzeichnet, dass die Nut (29) für den O-Ring (33) des Ablassventils (27), die Ablassöffnung (35) und der quer durchströmbare Gehäuseansatz (19) an einem abnehmbaren Gehäuseteil (4) angebracht sind.

9. Rückflussverhinderer nach Anspruch 8, dadurch gekennzeichnet, dass das Gehäuse (1) eine kreuzförmige Gestalt besitzt, dessen Querbalken durch den Zufluss- und Abflussstutzen (2, 3) gebildet ist, sowie den Ventilsitz (2) des Rückflussverhindererventils (22, 23, 10) aufnimmt und an dessen Unterseite das abnehmbare topfförmige Gehäuseteil (4) befestigt ist, wobei an seiner Oberseite ein zweites abnehmbares topfförmiges Gehäuseteil (5) angebracht ist und die beiden topfförmigen Gehäuseteile den Längsbalken des Kreuzes bilden.

10. Rückflussverhinderer nach Anspruch 9, dadurch gekennzeichnet, dass das zweite abnehmbare Gehäuseteil (5) ein zylindrisches Sieb (16) aufnimmt, das sich einenends am Topfboden und andernends im Bereich des Dichtringes (23) oder Ventilsitzes (22) des Rückflussverhindererventils abstützt.

11. Rückflussverhinderer nach Anspruch 10, dadurch gekennzeichnet, dass das zweite abnehmbare Gehäuseteil (5) aus insbesondere farbigem Kunststoff und das erste (4) aus transparentem Material, vorzugsweise auch aus Kunststoff, hergestellt sind.

12. Rückflussverhinderer nach einem oder mehreren der Ansprüche 9 bis 11, dadurch gekennzeichnet, dass im zweiten abnehmbaren Gehäuseteil (5) ein Arretierungsorgan (36) für das Verschlussorgan (10) gelagert ist, wobei das Betätigungsorgan (36) lediglich drehbar aber unverschiebbar im zweiten Gehäuseteil (5) gelagert ist und eine damit verbundene Gewindespindel (3) ein Gewinde des Verschlussorgans oder eines darin eingesetzten Teils (40) durchsetzt, und dass sich das Gewinde an einer drehfest aber längsverschiebbaren Mutter (40) im Innern des Verschlussorgans (10) befindet, wobei im Verschlussorgan eine Anschlagscheibe (43) für die Mutter in einer derartigen Lage angeordnet ist, dass bei entsprechend auf der Spindel eingestellter Mutter das Rückflussverhindererventil in geschlossener Stellung arretiert ist, während in der anderen Endstellung der Mutter das Verschlussorgan sich von der Mutter unbehindert verstellen kann.

**Claims**

1. Backflow preventer, especially for installation in a domestic water pipe having a backflow-preventing valve (22, 23, 10), which is arranged between a fresh water inlet pipe support (2) and a fresh water outlet pipe support (3), as well as with an outlet valve (27) for waste water arranged between the fresh water outlet support (3) and an outlet opening (35) for waste water, so that one of the two valves lies behind the other and they both have a common valve member (10) which is slidable in the axial direction, is impinged upon axially by inflowing water in the direction of opening of the backflow preventing valve (22, 23, 10) against the action of a spring (19) and has such a length that, approximately during the opening of one valve, the other is being closed and vice-versa, and that in the region of the outlet valve as in the valve seat (28) an immersed body is formed, characterised in that the valve member (10) is also formed as an immersed cylindrical body in the region of the backflow preventing valve as in the valve seat (22) of the backflow preventing valve, which body terminates in the form of a dome, and that the outlet opening (35) communicates axially with the outlet valve (27), and the outlet support (3) is situated between the two valves in the valve housing surrounding both valves.

2. Backflow preventer according to claim 1, characterised in that the valve member has a substantially constant cross-section and a circumferential flange (13) approximately at its midportion for abutment with one end of the load spring (13).

3. Backflow preventer according to claim 2, in which the load spring is formed as a helical compression spring, characterised in that the other end of the load spring (12) abuts with the housing (1) in the region of the outlet opening (35).

4. Backflow preventer according to claim 3, characterised in that the other end of the spring is centered by a tubular housing extension (19) through which fluid can flow, which is at the same time a guide for the end of its valve member (10) which can slide within it.

5. Backflow preventer according to one or more of claims 2 to 4, characterised in that the flange (13) also forms a stop member (15) for the valve member (10), which abuts with the tubular housing extension (19) when the backflow preventing valve (22, 23, 10) is open and the outlet valve (27) is closed, and abuts with or in the region of the valve sent (22) of the backflow preventing valve while the backflow preventing valve is closed and the outlet valve is open.

6. Backflow preventer according to one or more of the preceding claims characterised in that the valve member (10) extends out the housing (1) through the outlet opening (35) when the backflow preventing valve (22, 23, 10) is open and the outlet valve (27) is closed.

7. Backflow preventer according to one or more of the preceding claims, characterised in that the valve seat (28) of the outlet valve (27) is formed from a sealing element consisting of an O-ring (33) and that that of the backflow preventing valve is formed from a grooved ring (23).

8. Backflow preventer according to claim 7, characterised in that the groove for the O-ring (33) of the outlet valve (27), the outlet opening (35), and the housing extension (19) through which fluid can flow are on a detachable housing portion (4).

9. Backflow preventer according to claim 8, characterised in that the housing (1) is in the form of a cross, of which the horizontal member is formed from the inlet and outlet supports (2, 3), and also incorporate the valve seat (22) of the backflow preventing valve (22, 23, 10) and to the bottom of which the detachable cup-shaped housing portion is attached, whereby a second detachable cup-shaped housing portion (5) is mounted on its upper portion and the two cup-shaped housing portions form the vertical member of the cross.

10. Backflow preventer according to claim 9, characterised in that the second removable housing portion (5) incorporates a cylindrical filter (16), which abuts at one end with the base of the cup and at the other end in the region of the sealing ring (23) or valve seat (22) of the backflow preventing valve.

11. Backflow preventer according to claim 10, characterised in that the second removable housing portion (5) is manufactured from a specially coloured plastics material and the first removable housing portion (4) from a transparent material, preferably also a plastics material.

12. Backflow preventer according to one or more of claims 9 to 11, characterised in that in the second removable housing portion (5) there is provided a stop member (36) for the valve member (10), whereby the control member (36) is mounted solely for rotation and is non-slidable within the second housing portion (5) and a winding spindle (37) connected thereto brings about winding of the valve member or a part (40) inserted therein, and that the winding is located in a non-rotatable but longitudinally displacable nut (40) on the inside of the valve member whereby in the valve member an abutment disc (43) for the nut is arranged in such a position that the backflow preventing valve is arrested in the closed position in accordance with the nut adjusted on the spindle, while in the other end position of the nut the valve member can move unhindered by the nut.

**Revendications**

1 – Dispositif anti-reflux, destiné notamment à être monté dans une canalisation d'eau domestique et qui comprend une soupape anti-reflux (22, 23, 10) qui est disposée entre un raccord d'entrée d'eau propre (2) et un raccord de sortie d'eau propre (3), ainsi qu'une soupape de vidange (27) pour l'eau usée, qui est disposée entre le raccord (3) de sortie de l'eau et un orifice (35) de vidange de l'eau usée, les deux soupapes étant placées axialement l'une à la suite de l'autre et comportant un organe obturateur commun (10) qui est mobile en translation dans la direction axiale, est sollicité axialement dans le sens de l'ouverture de la soupape anti-reflux (22, 23, 10) par la pression de l'eau qui arrive à l'encontre de l'action d'un ressort (19), et a une longueur telle qu'à peu près au moment où l'une des soupapes s'ouvre, l'autre se ferme et inversement, cet organe obturateur présentant dans la région de la soupape de vidange la forme d'un corps qui plonge dans le siège (28) de la soupape, caractérisé en ce que l'organe obturateur (10) présente aussi bien dans la région de la soupape l'organe anti-reflux que dans le siège (22) de cette soupape la forme d'un corps cylindrique plongeant qui est fermé à la façon d'un piston, en ce que l'orifice de vidange (35) fait suite axialement à la soupape de vidange (27), et en ce que le raccord de sortie (3) se trouve entre les deux soupapes, sur le boîtier de soupape qui entoure les deux soupapes.

2 – Dispositif anti-reflux suivant la revendication 1, caractérisé en ce que l'organe obturateur (10) a sensiblement une section constante et présente, à peu près en son milieu, une collerette périphérique (13) servant à donner appui à l'une des extrémités du ressort (12).

3 – Dispositif anti-reflux suivant la revendication 2, dont le ressort est constitué par un ressort de compression hélicoïdal, caractérisé en ce que l'autre extrémité du ressort (12) prend appui sur le boîtier (1) dans la région de l'orifice de vidange (35).

4 – Dispositif anti-reflux suivant la revendication 3, caractérisé en ce que l'autre extrémité du ressort est centrée par une saillie tubulaire (19) du boîtier pouvant être parcourue transversalement par le courant de fluide et qui forme également un guide pour l'extrémité de l'organe obturateur qui peut y coulisser.

5 – Dispositif anti-reflux suivant l'une ou plusieurs des revendications 2 à 4, caractérisé en ce la collerette 13 forme en même temps un organe de butée (15) de l'organe obturateur (10), qui lorsque la soupape (22, 23, 10) anti-reflux est ouverte et la soupape de vidange (27) fermée, est appuyé sur la saillie tubulaire (19) du boîtier et qui, lorsque la soupape anti-reflux est fermée et la soupape de vidange ouverte, s'appuie sur le siège (22) de la soupape anti-reflux ou dans la région de ce siège.

6 – Dispositif anti-reflux, suivant l'une ou plusieurs des revendications précédentes, caractérisé en ce que l'organe obturateur (10) émerge du boîtier (1) à travers l'orifice de vidange (35) lorsque la soupape (22, 23, 10) anti-reflux est ouverte et que la soupape de vidange (27) est fermée.

7 – Dispositif anti-reflux, suivant l'une ou plusieurs des revendications précédentes, caractérisé en ce que le siège de soupape (28) de la soupape de vidange (27) est constitué par l'élément d'étanchéité consistant en une bague torique (33) est celui de la soupape anti-reflux par une bague à gorge (23).

8 – Dispositif anti-reflux suivant la revendication 7, caractérisé en ce que la gorge (29) destinée à la bague torique (33) de la soupape de vidange (27), l'orifice de vidange (35) et la saillie (29) du boîtier qui peut être parcourue transversalement par le courant de fluide sont montés sur une partie amovible (4) du boîtier.

9 – Dispositif anti-reflux suivant la revendication 8, caractérisé en ce que le boîtier a une forme en croix dont la traverse est formée par les raccords d'entrée (2) et de sortie (3) et reçoit le siège (22) de la soupape anti-reflux et à la face inférieure de laquelle est fixée la partie amovible (4) en forme de cuvette, du boîtier tandis qu'à sa face supérieure est montée une deuxième partie amovible (5), en forme de cuvette, du boîtier, les deux parties en forme de cuvette du boîtier formant le montant de la croix.

10 – Dispositif anti-reflux suivant la revendication 9, caractérisé en ce que la deuxième partie amovible (5) du boîtier reçoit un filtre cylindrique (16) qui s'appuie, à une extrémité, sur le fond de cuvette et, à l'autre extrémité, dans la région de la bague d'étanchéité (23) ou du siège (22) de la soupape anti-reflux.

11 – Dispositif anti-reflux suivant la revendication 10, caractérisé en ce que la deuxième partie amovible (5) du boîtier est réalisée en une matière plastique, notamment colorée, et que la première (4) est réalisée en une matière transparente, et de préférence également en matière plastique.

12 – Dispositif anti-reflux suivant l'une ou plusieurs des revendications 9 à 11, caractérisé en ce que dans la deuxième partie amovible (5) du boîtier, est logé un organe d'arrêt (36) pour l'organe obturateur (10), l'organe d'actionnement (36) étant monté uniquement mobile en rotation mais immobilisé en translation dans la deuxième partie (5) du boîtier et une tige filetée (3) qui lui est reliée traversant un filetage de l'organe obturateur ou d'une partie (40) montée dans cet organe, et en ce que le filetage se trouve dans un écrou (40) bloqué en rotation mais libre en translation longitudinale à l'intérieur de l'organe obturateur (10), une rondelle de butée (43) pour l'écrou étant disposée dans l'organe obturateur dans une position telle que, lorsque l'écrou est placé en position correspondante sur la tige filetée, la soupape anti-reflux soit arrêtée dans sa position fermée tandis que, dans l'autre position extrême de l'écrou, l'organe obturateur peut se déplacer sans en être empêché par l'écrou.

FIG.1

FIG.2